# EUROPÄISCHE PATENTSCHRIFT

(11) **EP 3 143 264 B1**
(45) Veröffentlichungstag und Bekanntmachung des Hinweises auf die Patenterteilung: **11.04.2018**
(21) Anmeldenummer: 15723673.8
(22) Anmeldetag: 08.05.2015
(51) Int. Cl.: F01N 11/00, G01N 27/22, G01N 22/02

(54) **METHODE ZUR DETEKTION DES ALTERUNGSGRADES VON ABGASKATALYSATOREN**
METHOD FOR THE DETECTION OF THE AGEING DEGREE OF AN EXHAUST GAS CATALYST
PROCÉDÉ POUR LA DÉTECTION DU DÉGREE DE VIEILLISSEMENT D'UN CATALYSEUR DE GAZ D'ÉCHAPPMENT

(30) Priorität: 16.05.2014 DE 102014209305
(43) Veröffentlichungstag der Anmeldung: 22.03.2017
(73) Patentinhaber: Umicore AG & Co. KG, 63457 Hanau-Wolfgang (DE)
(72) Erfinder: BEULERTZ, Gregor, 71229 Leonberg (DE); VOTSMEIER, Martin, 69469 Weinheim (DE); MOOS, Ralf, 95447 Bayreuth (DE)
(86) Internationale Anmeldenummer: PCT/EP2015/060238
(87) Internationale Veröffentlichungsnummer: WO 2015/173150

(56) Entgegenhaltungen:
- DE-A1-102008 012 050
- DE-A1-102010 034 983

## Beschreibung

Die vorliegende Erfindung ist auf ein Verfahren zur Bestimmung des Alterungszustandes eines Abgasreinigungskatalysators gerichtet. Das gegenständliche Verfahren arbeitet berührungslos durch Analyse von Resonanzen, welche sich bei Anregung des in einem Gehäuse angeordneten Katalysators mit hochfrequenten elektromagnetischen Wellen ausbilden.

Immer schärfere Abgasgesetze verbunden mit dem Druck zur Reduzierung des Kraftstoffverbrauches erfordern neue Konzepte sowohl für den Verbrennungsmotor als auch für dessen Abgasreinigung. Dies bedingt auch neue Konzepte für die Steuerung und Überwachung von Abgasreinigungsanlagen.

Z.B. wird beim stöchiometrisch betriebenen Ottomotor (sog. "λ = 1-Motor") das Luft/Kraftstoffverhältnis λ (auch Luftzahl genannt) des Rohabgases mit Hilfe einer ersten λ-Sonde detektiert. Bei einer Regelabweichung vom Sollwert λ = 1 wird dann das Luft/Kraftstoffverhältnis nachgeregelt. Im zeitlichen Mittel muss etwa λ = 1 eingehalten werden. Aufgrund der Sauerstoffspeicherfähigkeit des nach der ersten λ-Sonde angeordneten sog. "Dreiwegekatalysators" findet immer eine optimale Konversion statt, solange der Katalysator noch in gutem Zustand ist. Mit abnehmender Katalysatorgüte, was sich u.a. in einer Verringerung der Konversionsrate der schädlichen Abgase HC, CO und NO und einem Anstieg der Anspringtemperatur äußert, nimmt auch die Fähigkeit des Katalysators ab, Sauerstoff zu speichern. Eine zweite, nach dem Katalysator angeordnete λ-Sonde kann dies detektieren. Für ein solches indirektes Verfahren, bei dem aus den Signalen der beiden λ-Sondern auf den Zustand des sauerstoffspeichernden Katalysators geschlossen wird, ist eine sehr aufwändige Modellbildung notwendig, die insbesondere ein Motorbetriebszustandsmodell erfordert, s. z.B. J. Riegel et al., "Exhaust gas sensors for automotive emission control", Solid State lonics 152-153 (2002), 783-800.

Auch andere Katalysatorarten wie z.B. Diesel-(Oxidationskatalysatoren), beschichtete Partikelfilter, NOx-Speicherkatalysatoren und SCR-Katalysatoren unterliegen Alterungsphänomenen, die dazu führen, dass deren Konversionseffizienz über die Betriebsdauer permanent abnimmt. Eine geeignete Überwachung mittels OBD-Maßnahmen ist daher ein Muss, um Katalysatoren, welche die Abgasreinigung nicht mehr ausreichend bewerkstelligen zu können, zu identifizieren und ggf. auswechseln zu können.

Abhilfe schaffen hier insbesondere Verfahren, mit denen der Betriebszustand und die Güte eines Katalysators direkt bestimmt werden können, insbesondere während des regulären Betriebs. So kann ermittelt werden, inwieweit die Funktionalitäten eines Katalysators noch zur Verfügung stehen, wie z.B. R. Moos, M. Wedemann, M. Spörl, S. Reiß, G. Fischerauer, "Direct Catalyst Monitoring by Electrical Means: An Overview on Promising Novel Principles", Topics in Catalysis, 52 (2009), 2035-2040 zeigen konnten. Besonders einfach im Aufbau sind hier sog. hochfrequenzgestützte Systeme, wie sie z.B. in der DE102011107784A1, der DE102008012050A1 oder in der DE10358495A1 offenbart werden.

In der Anmeldung DE10358495A1 wird ein berührungsloses Verfahren zur Erkennung des Zustands eines Katalysators, insbesondere eines NOx-Speicherkatalysators, vorgeschlagen. Hierzu wird im Innenraum des als Hohlraumresonator ausgebildeten Katalysatorgehäuses eine elektromagnetische Mikrowellenresonanz angeregt und die Verschiebung der Resonanzfrequenz und/oder -güte beobachtet. Das Absinken der Resonanzfrequenz wird als Maß für die zunehmende NOx-Beladung des Speichermaterials des Katalysators genommen. Bei Erreichen eines vorgebbaren Werts der Resonanzfrequenz wird eine Regeneration durchgeführt.

Bei der DE102008012050A1 wird im Innenraum des als Hohlraumresonator ausgebildeten Katalysatorgehäuses eine elektromagnetische Mikrowellenresonanz angeregt und z.B. die Lage der Resonanzfrequenz beobachtet. Die Änderung der Resonanzfrequenz wird z.B. als Maß für die Sauerstoffbeladung des Speichermaterials des Katalysators genommen.

Es wäre wünschenswert, eine generell anwendbare ähnlich einfache und robuste Methode an der Hand zu haben, mit der die Güte oder Konversionseffizienz von möglichst allen Autoabgaskatalysatoren ausreichend gut und verlässlich bestimmt werden kann.

Diese und weitere Aufgaben, welche sich für den Fachmann in naheliegender Weise aus dem Stand der Technik ergeben, werden durch ein Verfahren mit den Merkmalen des vorliegenden Anspruchs 1 gelöst. In den von Anspruch 1 abhängigen Unteransprüchen kommen weitere bevorzugte Ausgestaltungen des erfindungsgemäßen Verfahrens zum Ausdruck.

Dadurch, dass man in einem Verfahren zur nichtinvasiven Detektion des Alterungszustandes eines Autoabgaskatalysators, der sich in einem metallischen Katalysatorgehäuse befindet, durch Aussendung eines elektromagnetischen Wechselfeldes, vorzugsweise im Mikrowellenbereich, und Detektion desselben die Adsorption von Wasser auf der Katalysatoroberfläche anhand von Resonanzcharakteristika bei einer Katalysatortemperatur von < 200°C bestimmt und dadurch auf den Alterungszustand des Katalysators rückschließt, gelangt man sehr vorteilhaft dafür aber nicht minder erfolgreich zur Lösung der gestellten Aufgabe.

Durch thermische Beanspruchung oder Vergiftung ändert sich die Oberfläche eines Autoabgaskatalysators. Bei diesem Prozess nimmt die Anzahl an freien Oberflächenplätzen, an denen Reaktionen ablaufen können, ab. Im Falle der Vergiftung werden die aktiven Zentren blockiert und im Falle von thermischer Beanspruchung sintern sowohl die fein verteilten Edelmetalle, als auch die Trägermaterialien zusammen. Die Oberfläche verringert sich so mit dem Alterungszustand und damit auch seine Fähigkeit, Substanzen an der Oberfläche zu chemisorbieren und physisorbieren. Durch die durch Alterung reduzierte Menge an freien Oberflächenplätzen ändert sich die Menge an Wasser, welches an der Oberfläche sorbiert werden kann. Die Menge an Wasser, die an der Oberfläche adsorbieren kann, ist weiterhin zum einen von ihrem Anteil im Abgas und zum anderen von der Temperatur abhängig. Die elektromagnetischen Materialparameter (el. Leitfähigkeit und Permittivität bzw. komplexe Permittivität) des Katalysators inkl. des Trägermaterials ändern sich durch die Sorption von Wasser.

Daher wird die entsprechende Resonanzcharakteristik entweder bei einer gegebenen Temperatur des Katalysators bestimmt oder über einen bestimmten Temperaturbereich verfolgt (z.B. d*f*ᵣₑₛ/d*T*) und anschließend mit Daten im weniger gealterten oder ggf. frischen Zustand des Katalysators, welche ggf. in der ECU des Autos gespeichert vorliegen, verglichen. Verschiebt sich das Ergebnis z.B. im Falle der Resonanzfrequenzänderung mit der Temperatur zu niedrigeren Werten ist von einer Alterung des Katalysators auszugehen, da dieser weniger Wasser sorbieren kann und somit die Hohlraumresonanzfrequenz entsprechend verändert ist. Allerdings zeigt sich eine ausreichende Differenzierung erst unterhalb einer Temperatur von 200°C. Die Messung wird daher vorzugsweise bei > 50°C und <200°C, bevorzugt zwischen 60°C und 150°C und ganz besonders bevorzugt zwischen 70°C und 120°C durchgeführt. Dieser Temperaturbereich ist auch deshalb vorteilhaft, da zumindest beim Dreiwegekatalysator die in der DE10358495A1 beschriebene Zustandsdiagnostik nicht anwendbar ist, da sich in diesem Temperaturbereich die elektrischen Eigenschaften kaum mit der Sauerstoffbeladung ändern, wie bereits in der DE102011107784A1, dort Fig. 4 gezeigt wurde. Bei dem erfindungsgemäßen Verfahren sollten Umgebungseinflüsse durch z.B. die Aufheizcharakteristik des Abgasstranges möglichst ausgeschlossen oder korrigiert werden. Zum Beispiel kann der Temperatureinfluss durch ein Verfahren wie in der DE102011107784A1 skizziert korrigiert werden.

Wie schon angedeutet ändert sich die Resonanzcharakteristik des bestrahlten Hohlraums im Betrieb des Fahrzeugs mit der Sorptionsfähigkeit des darin befindlichen Katalysators. Diese wiederum ist abhängig von seinem Alterungsgrad. Als zu adsorbierendes Agens kommt hier bevorzugt Wasser in Betracht, ist dies doch naturgemäß im Abgas immer mit vorhanden, wenn eine Kraftstoffverbrennung stattfindet. Wasser hat zudem eine hohe Dielektrizitätskonstante und ändert mit zunehmender oder abnehmender Sorption die elektromagnetischen Materialparameter des Katalysators entsprechend stark. Die Menge des adsorbierten Wassers wird neben dem Alterunszustand auch durch den Wassergehalt im Abgas beeinflusst. Vorteilhafterweise wird daher der Wassergehalt des Abgases in der Motorsteuerung berechnet und bei der Bestimmung des Alterungszustands aus dem Resonanzsignal berücksichtigt. Wenn sich der Wassergehalt im Abgas im Zeitverlauf ändert, kann die Auswertung zusätzlich verbessert werden, indem die endliche Sorptionsrate des Wassers mit berücksichtigt wird. Bevorzugt wird das erfindungsgemäße Verfahren dann angewandt, wenn eine ausreichende und möglichst konstante Menge an Wasser im Abgas vorhanden ist. Besonders bevorzugt führt man die Messung durch, wenn ein Abgasgemisch existiert, welches 3 - 20 Vol.-%, vorzugsweise 5 - 15 Vol.-% Wasser enthält.

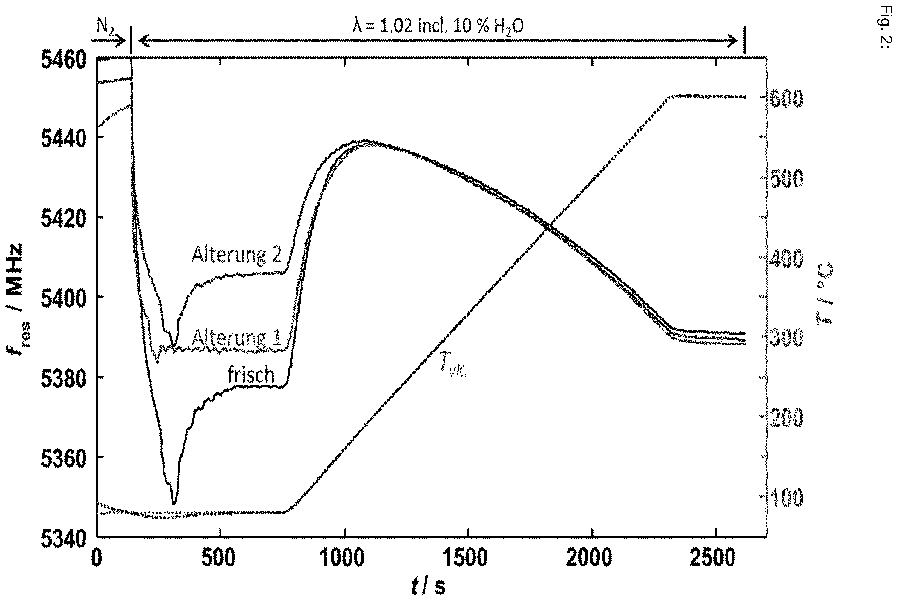

Die Bestimmung der elektrischen Eigenschaften des Katalysators kann nicht nur durch die Verwendung der Resonanzfrequenz, sondern auch durch weitere Resonanzcharakteristika in Betracht kommen. Als solche wählt man bevorzugt die aus der Gruppe bestehend aus Resonanzfrequenz, Amplitude, die Güte des Resonators (Q), die Verluste, die Parameter der Streumatrix Sᵢⱼ, den Betrag des Transmissionsfaktors, die Breite der Resonanzspitze bzw. des Resonanztals und andere aus den S-Parametern abgeleitete Größen (siehe hierzu DE102008012050A1) aus. Besonders bevorzugt ist die Resonanzfrequenz sowie der Betrag des Reflexionsparameters S₁₁ oder des Transmissionsparameters S₁₂ in diesem Zusammenhang. Ganz besonders bevorzugt ist die Auswertung über die Resonanzfrequenz in diesem Zusammenhang (siehe Fig. 2). Es können auch verschiedene Resonanzmoden verwendet werden. Insbesondere solche, die auf unterschiedliche Störgrößen wie z.B. die Temperatur unterschiedlich reagieren, sind bevorzugt.

Automobile Katalysatoren zeichnen sich normalerweise dadurch aus, dass sie eine hohe Oberfläche bereitstellen, an denen chemische Reaktionen beschleunigt durch fein verteilte Edelmetalle wie z. B. Pt, Pd oder Rh ablaufen. Wie weiter oben schon angedeutet, basiert das vorliegende Verfahren auf der Tatsache, dass sich die Resonanzcharakteristika mit zunehmender Alterung eines Katalysators ändern. Bei den hier betrachteten Katalysatoren handelt es sich um alle dem Fachmann in Frage kommenden, da alle Katalysatoren demselben Prinzip unterworfen sind. Bevorzugt sind solche Katalysatoren, die ausgewählt sind aus der Gruppe bestehend aus Dreiwegekatalysator, Diesel-Oxidationskatalysator, ggf. katalytisch beschichteter Dieselpartikelfilter, NOx-Speicherkatalysator, SCR-Katalysator. Besonders bevorzugt ist in diesem Zusammenhang der mit einem Sauerstoffspeichermaterial versehene Dreiwegekatalysator.

In einer bevorzugten Ausführungsform der vorliegenden Erfindung ist der Katalysator von einem Mikrowellenreflektor (3, 4) umgeben (DE102008012050A1). Geeignet hierfür sind alle Materialien, die dem Abgasstrom einen möglichst geringen Gegendruck entgegensetzen, welche jedoch im Stande sind, die eingesetzten Mikrowellen zu reflektieren. Der Fachmann weiß, welche Vorrichtungen hier in Frage kommen können. Im Zweifel helfen einfache metallene Gitter. Dadurch entsteht ein hochfrequenztechnisch eindeutig definierter und von der Form der Anschlussrohre unabhängiger Resonator. Dies kann vorteilhaft sein, weil die konusförmigen Übergänge zwischen dem Katalysatorgehäuse und den Anschlussrohren, insbesondere beim Gaseinlass, nach strömungstechnischen und nicht reflexionstechnischen Gesichtspunkten ausgelegt werden, z. B. dergestalt, dass der keramische Wabenkörper gleichmäßig vom Gas durchspült wird. Prinzipiell eignet sich hierfür jedoch auch ein entsprechendes metallisches Katalysatorgehäuse, in welchem der Katalysator normalerweise eingebaut wird. Ein Betrieb ohne die Reflexionsgitter ist demnach möglich, kann aber u.U. einen höheren Aufwand bei der Invertierung des Zusammenhangs zwischen Katalysatorzustand und gemessenen S-Parametern erfordern.

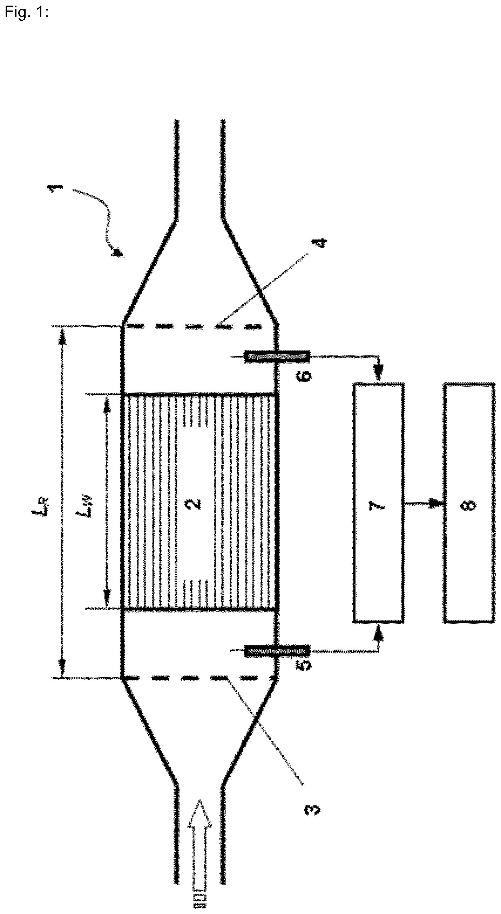

Vorzugsweise befindet sich vor dem Katalysator (2) und dahinter die Antenne(n) (5, 6) (Fig. 1) zum Senden und Empfangen der elektromagnetischen Strahlung, die vorteilhafter Weise im Mikrowellenbereich liegt. Bevorzugt ist jedoch ebenfalls ein erfindungsgemäßes Verfahren, bei dem man mittels einer im metallischen Katalysatorgehäuse befindlichen Antenne arbeitet. Diese sendet und empfängt die entsprechenden Signale. Die Antennen können nach Maßgabe des Fachmannes gewählt werden. Derartige Gerätschaften, wie auch die Signalerfassungseinheit und die entsprechende Analyseeinheit sind dem Fachmann hinlänglich bekannt (z.B. aus P.S. Neelakanta, Handbook of Electromagetic Materials. CRC Press, Boca Raton etc., 1995 und aus S.H. Chao, Measurements of microwave conductivity and dielectric constant by the cavity perturbation method and their errors, IEEE Transactions on Microwave Theory and Techniques 33 (1985) 519-526, bzw. aus der darin zitierten Literatur).

Die vorliegende Erfindung schafft es in besonders vorteilhafter Weise den Alterungszustand eines wie auch immer gearteten Abgaskatalysators zu bestimmen. Vor dem Prioritätstag war nicht bekannt, dass man über die Wassersorptionsfähigkeit des zu untersuchenden Katalysators innerhalb eines bestimmten Temperaturintervalls eine Aussage zur Katalysatorgüte treffen kann. Mit dem gegenständlichen Verfahren erhält der Fachmann erstmals eine Vorgehensweise an die Hand, mit der er im normalen Fahrbetrieb des Fahrzeugs, nichtinvasiv und direkt in relativ einfach gehaltener Art und Weise den Alterungszustand eines Autoabgaskatalysators bestimmen kann. Dies war vor dem Hintergrund des bekannten Standes der Technik mitnichten naheliegend.

### Beispiel:

**Fig. 1** zeigt den prinzipiellen Aufbau eines Abgasnachbehandlungssystems mit einem Gehäuseteil (1), in das ein Katalysator (2), ein Messsystem mit zwei Antennen (5, 6), von denen eine optional ist, Ansteuer- (7) und Auswertelektronik (8) und optionalem Temperaturfühler (siehe DE102008012050A1) sowie optionalem Reflektor (3, 4) eingebaut ist.
**Fig. 2** zeigt Resonanzfrequenzkurven, die an einer Synthesegasanlage für ∅1" x 3" TWC Bohrkerne gemessen wurden. Vermessen wurde ein Bohrkern. Dieser wurde zuerst frisch, und sowohl nach einer 12 stündigen Fuel-Cut Alterung bei 850 °C (Alterung 1) als auch nach einer Alterung bei 1050 °C (Alterung 2) getestet. In allen drei Alterungsstufen wurde der Katalysator zuerst mit einer Temperaturrampe (20 K/min) bis 600 °C unter reduzierenden Bedingungen (λ=0,95) vorkonditioniert und danach in Stickstoffatmosphäre bis auf 80 °C abgekühlt. Bei dem eigentlichen Test wurde ein synthetisches mageres Abgas (λ=1,02) mit 10 % H₂O konstant eingestellt. Die Temperatur wurde zu Begin bei 80 °C für 600 s gehalten und anschließend mit 20 K/min bis auf 600 °C erhöht. Die gemessene Resonanzfrequenz und die Temperatur vor Katalysator bei den drei Tests sind in Fig. 2 aufgetragen. Beim Wechsel von N₂ zu der wasserhaltigen Atmosphäre ist eine deutliche Änderung in der Resonanzfrequenz abhängig vom Alterungsgrad und den dadurch veränderten Sorptionseigenschaften des Katalysators zu erkennen. Ebenfalls abhängig ist die Änderung der Resonanzfrequenz mit der Temperatur bis etwa 200 °C.

Aus den Messdaten in Fig. 2 wurden beispielsweise die Änderung der Resonanzfrequenz mit der Temperatur zwischen 80 und 100 °C sowie die Resonanzfrequenz bei 80 °C ausgewertet (Tabelle 1)

**Tabelle 1:**

| | d*f*/d*T*/ MHz/K (zwischen 80 und 100 °C) | *f*ᵣₑₛ (*T*=80°C) / MHz |
|---|---|---|
| frisch | 1.43 | 5377.4 |
| Alterung 1 (850 °C) | 1.19 | 5386.7 |
| Alterung 2 (1050 °C) | 0.85 | 5406.2 |

## Patentansprüche

1. Verfahren zur nichtinvasiven Detektion des Alterungszustandes eines Autoabgaskatalysators, der sich in einem metallischen Katalysatorgehäuse befindet, durch Aussendung eines elektromagnetischen Wechselfeldes und Detektion desselben, **dadurch gekennzeichnet, dass** man die Adsorption von Wasser auf der Katalysatoroberfläche anhand von bestimmten Resonanzcharakteristika bei einer Katalysatortemperatur von < 200°C bestimmt und dadurch auf den Alterungszustand des Katalysators rückschließt.

2. Verfahren nach Anspruch 1,
**dadurch gekennzeichnet, dass**
man bei einer Temperatur von >50°C arbeitet.

3. Verfahren nach Anspruch 1 und/oder 2,
**dadurch gekennzeichnet, dass**
man während der Messung ein Abgasgemisch bereitstellt, welches 3 - 20 Vol.-% Wasser enthält.

4. Verfahren nach Anspruch 1 - 3,
**dadurch gekennzeichnet, dass**
man als Resonanzcharakteristika mindestens eine Größe aus der Gruppe bestehend aus Resonanzfrequenz, Amplitude, der Güte des Resonators (Q), der Verluste, der Parameter der Streumatrix Sᵢⱼ und darauf basierender Größen, letztere auch in verschiedenen Frequenzbereichen, heranzieht.

5. Verfahren nach Anspruch 1 - 4,
**dadurch gekennzeichnet, dass**
man mittels einer im metallischen Katalysatorgehäuse befindlichen Antenne arbeitet.

## Claims

1. Method for the non-invasive detection of the degree of aging of an automotive exhaust gas catalytic converter, which is located in a metallic catalytic converter housing, via emission of an alternating electromagnetic field and detection of the same,
**characterized in that**
the adsorption of water on the catalyst surface is determined using certain resonance characteristics at a catalyst temperature of < 200 °C, and the degree of aging of the catalytic converter is thereby inferred.

2. Method according to claim 1,
**characterized in that**
work is done at a temperature of > 50 °C.

3. Method according to claim 1 and/or 2,
**characterized in that**
an exhaust gas mixture that contains 3 - 20 vol% water is provided during measurement.

4. Method according to claims 1 - 3,
**characterized in that,**
as resonance characteristics, at least one quantity is used from the group consisting of resonance frequency, amplitude, the quality of the resonator (Q), the losses, the parameters of the scatter matrix Sᵢⱼ, and quantities based thereupon (the latter also in different frequency ranges).

5. Method according to claims 1 - 4,
**characterized in that**
work is done by means of an antenna located in a metallic catalytic converter housing.

## Revendications

1. Procédé de détection non invasive du degré de vieillissement d'un convertisseur catalytique automobile, qui se trouve dans un boîtier métallique de catalyseur, par émission d'un champ électromagnétique alternatif et détection de celui-ci, **caractérisé en ce que** l'adsorption d'eau sur la surface du catalyseur est déterminée à l'aide de caractéristiques de résonance définies à une température du catalyseur de < 200 °C puis le degré de vieillissement du catalyseur est déduit à partir de celle-ci.

2. Procédé selon la revendication 1,
**caractérisé en ce que**
le travail est effectué à une température de > 50 °C.

3. Procédé selon la revendication 1 et/ou 2,
**caractérisé en ce que**
pendant la mesure, un mélange de gaz d'échappement, contenant de 3 à 20 % en volume d'eau, est utilisé.

4. Procédé selon la revendication 1 - 3,
**caractérisé en ce que**
au moins une grandeur est prise en compte en tant que caractéristique de résonance, choisie dans le groupe constitué de la fréquence de résonance, l'amplitude, la qualité du résonateur (Q), les pertes, les paramètres de la matrice de dispersion Sᵢⱼ et des grandeurs basées sur ceux-ci, ces dernières également dans différentes plages de fréquences.

5. Procédé selon la revendication 1 - 4,
**caractérisé en ce que**
le travail est effectué au moyen d'une antenne se trouvant dans le boîtier métallique de catalyseur.
